# EUROPEAN PATENT SPECIFICATION

(11) **EP 1 339 539 B1**
(45) Date of publication and mention of the grant of the patent: **19.01.2005**
(21) Application number: 01990441.6
(22) Date of filing: 27.11.2001
(51) Int. Cl.: B29D 30/06, B60C 1/00, B29C 33/64, C08J 7/04

(54) **PROCESS FOR MANUFACTURING, MOULDING AND CURING TYRES FOR VEHICLES WHEELS**
VERFAHREN ZUR HERSTELLUNG; FORMUNG UND VULKANISIERUNG VON REIFEN FÜR FAHRZEUGRÄDER
FABRICATION, MOULAGE ET VULCANISATION DE PNEUS D'AUTOMOBILES

(30) Priority: 06.12.2000 EP 00126779; 18.12.2000 US 255906 P
(43) Date of publication of application: 03.09.2003
(73) Proprietor: PIRELLI PNEUMATICI Società per Azioni, 20126 Milano (IT)
(72) Inventor: MAURIZIO, Galimberti, I-20133 Milano (IT); FINO, Luigi, I-20030 Bovisio Masciago (IT); SENATORE, Daniela, I-84014 Nocera Superiore (SA) (IT); ALBIZZATI, Enrico, I-28048 Lesa (IT)
(74) Representative: Giannesi, Pier Giovanni
(86) International application number: PCT/EP2001/013772
(87) International publication number: WO 2002/045942

(56) References cited:
- EP-A- 0 976 534
- GB-A- 786 131
- US-A- 2 795 262

## Description

The present invention relates to a process for manufacturing, moulding and curing tyres for vehicle wheels.

More particularly, the present invention relates to a process for manufacturing, moulding and curing tyres for vehicle wheels, which involves the introduction of a fluid under pressure directly in contact with the green tyre, that is to say in the absence of a vulcanization bladder.

In a cycle for vehicle wheels tyre production it is provided that, subsequently to a manufacturing process in which the various components of the tyre are made and assembled, a moulding and curing process intended to stabilize the structure of the tyre in a desired geometrical configuration, normally characterized by a particular tread pattern, is carried out. For this purpose, the green tyre is enclosed in a moulding cavity defined within a vulcanization mould and shaped according to the configuration of the outer surface of the tyre to be obtained.

For the purpose of the present invention and the claims, the term "green tyre" means the product obtained after the manufacturing step, in which are assembled the various components of the tyre and the elastomeric material is not yet vulcanized. The term "outer surface" means the visible surface of the tyre once this tyre has been mounted on the rim of the wheel, while the term "inner surface" means the surface of the tyre which is in contact with the fluid for inflating the tyre.

Curing methods are known in which steam or another fluid under pressure is introduced directly into the tyre enclosed in the moulding cavity, in the absence of a curing bladder. However, said methods, in which there is direct contact between the green tyre and the fluid under pressure, can lead to numerous drawbacks owing to the permeation of the fluid itself into the structure of the tyre which has not yet been vulcanized.

A number of solutions have been proposed in order to overcome the abovementioned drawbacks.

For example, German patent DE 355 909 discloses a process for manufacturing tyres in which a liquid under pressure is placed directly in contact with the inner surface of the tyre before or during vulcanization, characterized in that, before vulcanization, an inner layer of the tyre is treated so that it becomes impermeable to said liquid. Said treatment is carried out by partial vulcanization of the layer(s) which form(s) the abovementioned inner layer, before or after the other layers which form the tyre are superimposed. The elastomeric composition of said inner layer is not described.

Patent US-A-2 795 262 discloses a method for preparing a tyre carcass which involves applying to the inner surface of said non-vulcanized carcass a continuous film based on an elastomeric silicone polymer so as to prevent direct contact of the fluid under pressure with the carcass which has not yet been vulcanized.

British patent GB-A-0 397 508 discloses a method for producing tyres in which a coating is applied to the inner surface of the green tyre by spraying, this coating comprising an adhesive or gelatin, glycerol or polyglycerol, water, phenol and alcohol so as to prevent direct contact of the fluid under pressure with the carcass.

Patent US-A-3 769 122 discloses a method for preparing the innerliner of a tubeless tyre, which involves applying an elastomeric material to the inner surface of the carcass of said tyre, by spraying, this elastomeric material essentially comprising 85%-100%, preferably 95%-100%, even more preferably 100%, of a halobutyl or butyl rubber or mixtures thereof. Said application can be carried out before or after moulding and curing the tyre and the elastomeric material applied is then cured at ambient temperature or at moderately elevated temperatures. For the purpose of increasing the rate of curing, an ultra-accelerator such as, for example, para-quinone dioxime is added. If the application takes place before the curing of the tyre, the curing, total or partial, of said innerliner would make it possible to obtain a barrier to the fluid under pressure, so as to prevent direct contact of this fluid under pressure with the carcass.

Patent US-A-4 221 253 discloses a process for producing tyres in which the inner surface of the tyre is partially or totally vulcanized by irradiation with electrons. Said treatment would make it possible to obtain a barrier to the fluid under pressure, so as to prevent direct contact of this fluid under pressure with the carcass.

European patent application EP-A-0 976 534 in the name of the Applicant discloses a process for manufacturing a tyre which includes a step of treating the inner surface of the green tyre so as to prevent the permeation of the fluid under pressure into the structure of the tyre: said treatment may be carried out by combining at least one layer made of prevulcanized elastomeric material with the inner surface of the green tyre. For the purpose of increasing the rate of vulcanization and/or reducing the temperature required to obtain a sufficient degree of pre-vulcanization, a nitrogen-containing co-accelerator chosen, for example, from: N-cyclohexyl-N-ethylamine, diphenylguanidine and the like, may be advantageously added to the vulcanization accelerators normally used, in an amount of between 2 phr and 15 phr, preferably between 5 phr and 10 phr.

The Applicant has found that the most critical step, with regard to the diffusion of the fluid under pressure into the structure of the tyre which has not yet been vulcanized, is that corresponding to the initial moments of the introduction of said fluid under pressure directly into the tyre enclosed in the moulding cavity, that is to say when the degree of crosslinking of the elastomeric material of which the tyre is made is substantially zero or at any rate very low. As a matter of fact, the permeation of the fluid under pressure may lead, for example, to delamination between the adjacent blend layers, may have a negative impact on the adhesion processes between the elastomeric material and the metallic or textile reinforcing structures, or may even promote corrosion of the metallic reinforcing materials.

The Applicant has now found that it is possible to overcome the abovementioned drawbacks by producing a layer of elastomeric material which is capable of reaching, in the early stages of the manufacturing of the tyre, in particular in the initial moulding stage when the fluid under pressure is introduced into the tyre which has not yet been vulcanized, a degree of crosslinking which is sufficient to contain said fluid under pressure.

The Applicant has found that it is possible to satisfy the abovementioned requirements by producing a layer of crosslinkable elastomeric material comprising at least one elastomer containing hydrolysable silane groups. The presence of said hydrolysable silane groups is capable of increasing the rate of crosslinking of said elastomeric material and thus makes it possible to avoid the use of co-accelerators or of large amounts of vulcanization accelerators, and to avoid special treatments of the inner surface of the tyre.

According to a first aspect, the present invention relates to a process for manufacturing, moulding and curing tyres for vehicle wheels, comprising the following steps:
- forming at least one coating layer made of crosslinkable elastomeric material on an outer surface of a toroidal support the shape of which substantially matches that of the inner surface of the tyre;
- manufacturing a green tyre comprising at least one element which includes a crosslinkable elastomeric material on said toroidal support bearing said coating layer;
- closing the green tyre in a moulding cavity defined inside a vulcanization mould, said moulding cavity having walls the shape of which matches that of an outer surface of the tyre once vulcanization is complete;
- introducing into the space defined by an inner surface of the tyre a fluid under pressure to press the outer surface of the green tyre against the walls of the moulding cavity;
- applying heat to the tyre for causing the vulcanization of the crosslinkable elastomeric material;
characterized in that said coating layer comprises at least one elastomer containing hydrolysable silane groups.

Said coating layer also preferably comprises a crosslinking agent based on sulphur or derivatives thereof.

According to a preferred embodiment, said coating layer reaches a degree of crosslinking which is sufficient to prevent the diffusion and penetration of the fluid under pressure into the green tyre, within a period not greater than 10 minutes, preferably between 1 minute and 5 minutes, working at a temperature not greater than 210°C, preferably between 140°C and 140°C.

According to a preferred embodiment, said fluid under pressure is chosen from steam, air and nitrogen, or mixtures thereof. More preferably, said fluid under pressure is steam.

In a second aspect, the present invention relates to a tyre for vehicle wheel, comprising the following elements:
- a carcass structure having at least one rubberized carcass ply shaped in a substantially toroidal configuration and engaged, by means of its opposite circumferential edges, to a pair of inextensible annular structures;
- a belt structure comprising at least one belt strip applied in a circumferentially external position relative to said carcass structure;
- a tread band circumferentially superimposed on said belt structure;
- a pair of sidewalls applied laterally to opposite sides relative to said carcass structure;
- a coating layer made of crosslinked elastomeric material placed in a radially internal position relative to said rubberized carcass ply;
characterized in that said coating layer is obtained by crosslinking at least one elastomer containing hydrolysable silane groups. Preferably, the crosslinking of said coating layer is obtained in the presence of a crosslinking agent based on sulphur or derivatives thereof.

According to a preferred embodiment, said coating layer is impermeable to a fluid for inflating the tyre when the tyre is installed on a rim and inflated. In other words, this layer is capable of acting as the so-called liner which, in tubeless tyres, is the air-impermeable layer which ensures the hermetic seal of the tyre when this tyre is installed on a rim and inflated.

According to a preferred embodiment, said coating layer comprises from 20 phr to 100 phr, preferably from 50 phr to 90 phr, of at least one elastomer containing hydrolysable silane groups. Said elastomer preferably comprises from 0.1% to 5% by weight, more preferably from 0.5% to 3% by weight, of hydrolysable silane groups.

For the purpose of the present description and the claims which follow, the term "phr" is used to indicate the parts by weight of a given ingredient per each 100 parts by weight of the elastomeric base.

According to another preferred embodiment, said coating layer also comprises from 0 phr to 30 phr, preferably from 5 to 15 phr, of at least one butyl rubber.

According to a further preferred embodiment, said coating layer also comprises from 0 phr to 80 phr, preferably from 10 phr to 50 phr, of at least one diene elastomer other than butyl rubber.

According to another preferred embodiment, said coating layer also comprises from 0 phr to 3 phr, preferably from 0.5 phr to 1.5 phr, of a coupling agent.

According to another preferred embodiment, said coating layer also comprises from 0 phr to 0.5 phr, preferably from 0.05 phr to 0.15 phr, of a condensation catalyst.

According to another preferred embodiment, said coating layer also comprises from 0 phr to 5 phr, preferably from 0.5 phr to 3 phr, of a silane of general formula (I) : 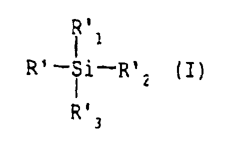 in which:
- R' is chosen from C₁-C₁₈ alkyl groups, C₆-C₂₀ aryl groups, C₇-C₃₀ alkylaryl or arylalkyl groups, C₃-C₃₀ cycloalkyl groups, said cycloalkyl groups optionally being substituted with C₁-C₁₈ alkyl groups;
- R'₁, R'₂ and R'₃, which may be identical or different, are chosen from hydrogen, C₁-C₈ alkoxy groups, C₁-C₁₈ alkyl groups, C₆-C₂₀ aryl groups, C₇-C₃₀ alkylaryl or arylalkyl groups, on condition that at least one of the groups R'₁, R'₂ and R'₃ represents an alkoxy group.

According to a particularly preferred embodiment, the abovementioned elastomer containing hydrolysable silane groups may be obtained by reacting an elastomer containing at least one functional group with a silane containing at least one hydrolysable group and at least one reactive group which is capable of reacting with said functional group of the elastomer.

Preferably, the elastomer containing hydrolysable silane groups may be obtained by reacting an elastomer containing at least one halogen functional group chosen from chlorine and bromine, with a silane containing at least one hydrolysable group and at least one reactive group which is capable of reacting with said functional group of the elastomer.

Alternatively, the elastomer containing hydrolysable silane groups may be obtained by reaction between an elastomer containing at least one functional group chosen from:
- anhydride groups -(RCO)₂O in which R is an alkylene group;
- carboxyl groups -COOH;
- ester groups -COOR in which R is an alkyl or aryl group;
- amide groups -CONH₂;
with a silane containing at least one hydrolysable group and at least one reactive group which is capable of reacting with said functional group of the elastomer.

The reactive group of the silane is preferably chosen from amine groups and epoxide groups.

According to a preferred embodiment, said silane is used in an amount comprised between 0.1 phr and 5 phr, preferably between 0.5 phr and 3 phr.

When the elastomer contains at least one halogen functional group, said coating layer also comprises from 0.1 phr to 4 phr, preferably from 1 phr to 3 phr, of a trapping agent.

The elastomer containing hydrolysable silane groups is advantageously prepared "in situ" at the time of preparation of the compound used for said coating layer, in particular during the first step of processing of said compound as described below.

The process for producing the tyre according to the present invention may be carried out as disclosed, for example, in European patent applications EP-A-0 943 421 and EP-A-0 919 406 in the name of the Applicant, which are incorporated herein by means of reference. In particular, the tyre under consideration may be obtained by producing the various components directly on a toroidal support on which the tyre itself is formed step by step, or at least in the immediate vicinity of this tyre. It is also possible to produce said tyre according to conventional processes involving the steps of first preparing, separately, a series of semifinished articles corresponding to the various parts of the tyre (carcass plies, belt strips, bead wires, beads, fillers, sidewalls and tread bands) which are then combined together using a suitable manufacturing machine.

The green tyre obtained by one of the abovementioned processes is then subjected to a vulcanization step which may be carried out in any known conventional manner.

As mentioned above, the elastomer containing hydrolysable silane groups may be obtained from an elastomer containing a halogen functional group. Said elastomer may be chosen from halobutyl rubbers, epihalohydrin rubbers and halogenated isobutylene/p-alkylstyrene copolymers.

Halobutyl rubbers are derived from butyl rubbers by reaction of chlorine or bromine according to methods known in the art, and can contain up to 2 halogen atoms for each double bond present in the copolymer. Generally, halobutyl rubbers contain at least 0.5% by weight and preferably at least 1% by weight of halogen and have a viscosimetric average molecular weight comprised between 150,000 and 1,500,000 and a molar unsaturation comprised between 0.5% and 15%. Examples of butyl rubbers include copolymers containing from about 95.5% to about 99.5% of isobutylene and from about 0.5% to about 4.5% of isoprene.

Butyl rubbers that are particularly preferred according to the present invention are chlorobutyl rubber and bromobutyl rubber. Examples of commercially available chlorobutyl and bromobutyl rubbers which may be used in the present invention are the products Polysar® Chlorobutyl 1240 and Polysar® Bromobutyl 2030 from Bayer.

Epihalohydrin rubbers comprise (1) homopolymers of an epihalohydrin such as, for example, epichlorohydrin or epibromohydrin, and the like, (2) copolymers of an epihalohydrin with less than 30% of a saturated epoxide monomer or with an unsaturated epoxide monomer, and (3) terpolymers of an epihalohydrin with (a) less than 30% of a saturated epoxide monomer or mixtures of saturated epoxide monomers, (b) an unsaturated epoxide monomer or mixtures of unsaturated epoxide monomers, or with (c) mixtures of (a) and (b). The epihalohydrin polymers may be prepared by polymerizing an epihalohydrin monomer, alone or together with one or more of the epoxide monomers mentioned above, in the presence of a catalyst such as, for example, an organometallic catalyst. The epihalohydrin homopolymers are believed to contain repeating units of the following formula: 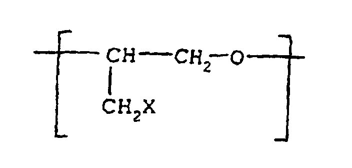 in which X is a halogen, derived from the polymerization which involves the epoxide bonds. The halogen is chosen from chlorine and bromine. The saturated epoxide monomers are chosen from alkylene oxides (for example ethylene oxide); the unsaturated epoxide monomer is, for example, allylglycidyl ether.

Further details regarding the preparation of the epihalohydrin polymers that are suitable for carrying out the present invention are disclosed, for example, in patent US-A-3 158 500.

An example of an epihalohydrin rubber which may be used in the present invention and which is currently commercially available is the product Hydrin® T75 from Nippon Zeon.

The halogenated isobutylene/p-alkylstyrene copolymers are chosen from copolymers of an isoolefin containing from 4 to 7 carbon atoms such as, for example, isobutylene, and of a p-alkylstyrene such as, for example, p-methylstyrene, are known in the prior art and are disclosed, for example, in patent US-A-5 162 445.

Preferred products are those derived from the halogenation of a copolymer between an isoolefin containing from 4 to 7 carbon atoms such as, for example, isobutylene, and a comonomer such as p-alkylstyrene in which at least one of the substituents on the alkyl groups present in the styrene unit is a halogen.

Further details regarding the preparation of halogenated isobutylene/p-alkylstyrene copolymers that are suitable for carrying out the present invention are disclosed, for example, in patent US-A-5 512 638.

Examples of halogenated isobutylene/p-alkylstyrene copolymers which may be used in the present invention and which are currently commercially available include the Exxpro® products from Exxon.

Alternatively, as mentioned above, the elastomer containing hydrolysable silane groups may be obtained from an elastomer containing a functional group chosen from anhydride groups, carboxyl groups, ester groups and amide groups. Said elastomer may be prepared as disclosed, for example, in patents US-A-4 996 262 and US-A-6 009 923.

According to a preferred embodiment, the silane containing at least one hydrolysable group and at least one reactive group which is capable of reacting with said functional group of the elastomer is an aminosilane of general formula (II): 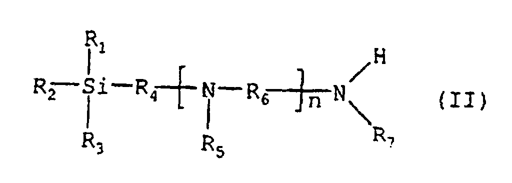 in which:
- R₁, R₂ and R₃, which may be identical or different, are chosen from hydrogen, C₁-C₈ alkoxy groups, C₁-C₁₈ alkyl groups, C₆-C₂₀ aryl groups, C₇-C₃₀ alkylaryl or arylalkyl groups, on condition that at least one of the groups R₁, R₂ and R₃ represents an alkoxy group;
- R₄ is chosen from C₁-C₁₈ alkylene groups, C₆-C₂₀ arylene groups, said arylene groups optionally being substituted with C₁-C₈ alkyl groups;
- R₅ and R₇, which may be identical or different, are chosen from hydrogen, C₁-C₁₈ alkyl groups; or, when R₅ and R₇ are other than hydrogen, they may form, together with the nitrogen atoms to which they are attached, 5- or 6-membered heterocyclic rings;
- R₆ is chosen from C₁-C₁₈ alkylene groups, C₆-C₁₄ arylene groups, arylene groups optionally substituted with C₁-C₁₈ alkyl groups, C₇-C₃₀ alkylenearylene or arylenealkylene groups, C₃-C₃₀ cycloalkylene groups, said cycloalkylene groups optionally being substituted with C₁-C₁₈ alkyl groups;
- n is a integer from 0 to 5.

Preferably, R₁, R₂ and R₃ are C₁-C₃ alkoxy groups, R₄ is a C₁-C₃ alkylene group, R₇ is hydrogen and n is 0.

The abovementioned aminosilanes may be pure products or a mixture of different aminosilanes of formula (II).

Specific examples of aminosilanes of formula (II) are: 2-trimethoxysilylethylamine, 2-triethoxysilylethylamine, 2-tripropoxysilylethylamine, 2-tributoxysilylethylamine, 3-trimethoxysilylpropylamine, 3-triethoxysilylpropylamine, 3-tripropoxysilylpropylamine, 3-triisopropoxysilylpropylamine, 3-tributoxysilylpropylamine, 4-trimethoxysilylbutylamine, 4-triethoxysilylbutylamine, 4-tripropoxysilylbutylamine, 4-tributoxysilylbutylamine, 5-trimethoxysilylpentylamine, 5-triethoxysilylpentylamine, 5-tripropoxysilylpentylamine, 5-tributoxysilylpentylamine, 6-trimethoxysilylhexylamine, 6-triethoxysilylhexylamine, 6-tripropoxysilylhexylamine, 6-tributoxysilylhexylamine, 7-trimethoxysilylheptylamine, 7-triethoxysilylheptylamine, 7-tripropoxysilylheptylamine, 7-tributoxysilylheptylamine, 8-trimethoxysilyloctylamine, 8-triethoxysilyloctylamine, 8-tripropoxysilyloctylamine, 8-tributoxysilyloctylamine, N-(2-aminoethyl)-3-aminopropylmethyldimethoxysilane, N-(2-aminoethyl)-3-aminopropyltrimethoxysilane, 1-[3-(trimethoxysilyl)propyl]-piperazine, N-[3-(trimethoxysilyl)propyl]-1,4-bis-(3-aminopropyl)piperazine, N-(3-aminopropyl)-3-aminopropyltrimethoxysilane, N-(4-aminobutyl)-3-aminopropyltrimethoxysilane, N-[3-(trimethoxysilyl)propyl]-1,3-bis(aminomethyl)cyclohexane, N-[3-(trimethoxysilyl)propyl]-4,4'-diaminodiphenylmethane, N-[3-(trimethoxysilyl)propyl]-1,2-diaminocyclohexane, N-[3-(trimethoxysilyl)propyl]-1,4-diaminobutane, N-[3-(trimethoxysilyl)propyl]-2,4-diaminotoluene, N-(2-aminoethyl)-N'-[3-(trimethoxysilyl)propyl]-1,3-propanediamine, N-[2-[[3-(trimethoxysilyl)propyl)amino]ethyl]-1,3-propanediamine, N-(3-aminopropyl)-N'-[3-[[3-(trimethoxysilyl)propyl]amino]propyl]-1,2-ethanediamine, N-(2-aminoethyl)-N'-[2-[[3-(trimethoxysilyl)propyl]-amino]ethyl]-2,3-propanediamine, N-(3-aminopropyl)-N'-[3-[[3-(trimethoxysilyl)propyl]amino]propyl]-1,2-butanediamine, and the like. 3-Triethoxysilylpropylamine is particularly preferred according to the present invention. An example of an aminosilane which may be used in the present invention and which is currently commercially available is the product Dynasylan® AMEO (A-1100) from Sivento-Chemie.

According to another preferred embodiment, the silane containing at least one hydrolysable group and at least one reactive group which is capable of reacting with said functional group of the elastomer is chosen from epoxysilanes such as, for example, 3-glycidyloxypropyltrimethoxysilane, 3-glycidyloxypropylmethyldimethoxysilane, 2-(3,4-epoxycyclohexyl)ethyltrimethoxysilane, and the like. 3-Glycidyloxypropyltrimethoxysilane is preferred according to the present invention. An example of an epoxy silane which may be used in the present invention and which is currently commercially available is the product Dynasylan® GLYMO (A-187) from Sivento-Chemie.

As mentioned above, the coating layer may also comprise a butyl rubber. According to a preferred embodiment, the butyl rubber is chosen from copolymers containing from about 95.5% to about 99.5% isobutylene and from about 0.5% to about 4.5% isoprene.

As mentioned above, the coating layer may also comprise a diene elastomer. According to a preferred embodiment, the diene elastomer is chosen from natural and synthetic rubbers, optionally oil-extended, such as, for example, natural rubber; polybutadiene; polyisoprene; styrene/butadiene copolymers; butadiene/isoprene copolymers; styrene/isoprene copolymers; nitrile rubbers; terpolymers of ethylene, propylene and, for example, unconjugated dienes such as 5-ethylidene-2-norbornene, 1,4-hexadiene, cyclooctadiene or dicyclopentadiene; and the like, or mixtures thereof.

Natural rubber is particularly preferred according to the present invention.

For the purpose of further promoting the co-crosslinking with the other layers made of elastomeric material in the tyre, the coating layer, as mentioned above, may also comprise a coupling agent containing at least one hydrolysable silane group and at least one sulphur atom.

According to a preferred embodiment, the coupling agent is a compound of formula (III):

Z-Alk-Sₙ-Alk-Z (III)

in which Z is chosen from the following groups: -Si(R₁)₂(R₂), -Si(R₁)(R₂)₂ and -Si(R₂)₃, in which R₁ is a C₁-C₄ alkyl group, a cyclohexyl group or a phenyl group and R₂ is a C₁-C₁₈ alkoxy group or a C₅-C₈ cycloalkoxy group; Alk is a divalent hydrocarbon containing from 1 to 18 carbon atoms and n is a number from 2 to 8.

Specific examples of compounds of formula (III) are: 3,3'-bis(trimethoxysilylpropyl) disulphide, 3,3'-bis-(triethoxysilylpropyl) tetrasulphide, 3,3'-bis(triethoxysilylpropyl) octasulphide, 3,3'-bis(trimethoxysilylpropyl) tetrasulphide, 2,2'-bis(triethoxysilylethyl) tetrasulphide, 3,3'-bis(trimethoxysilylpropyl) trisulphide, 3,3'-bis(triethoxysilylpropyl) trisulphide, 3,3'-bis(tributoxysilylpropyl) disulphide, 3,3'-bis(trimethoxysilylpropyl) hexasulphide, 3,3'-bis-(trimethoxysilylpropyl) octasulphide, 3,3'-bis(trioctoxysilylpropyl) tetrasulphide, 3,3'-bis(triethoxysilylpropyl) disulphide, 3,3'-bis(tri-2-ethylhexoxysilylpropyl) trisulphide, 3,3'-bis(triisooctoxysilylpropyl) tetrasulphide, 3,3'-bis(tri-t-butoxysilylpropyl) disulphide, 2,2'-bis(methoxydiethoxysilylethyl) tetrasulphide, 2,2'-bis(tripropoxysilylethyl) pentasulphide, 3,3'-bis(tricyclohexoxysilylpropyl) tetrasulphide, 3,3'-bis(tricyclopentoxysilylpropyl) trisulphide, 2,2'-bis(tri-2-methylcyclohexoxysilylethyl) tetrasulphide, bis(trimethoxysilylmethyl) tetrasulphide, 3-methoxyethoxypropoxysilyl-3'-diethoxybutoxysilylpropyl tetrasulphide, 2,2'-bis(dimethylmethoxysilylethyl) disulphide, 2,2'-bis(dimethyl-S-butoxysilylethyl) trisulphide, 3,3'-bis(methylbutylethoxysilylpropyl) tetrasulphide, 3,3'-bis(di-t-butylmethoxysilylpropyl) tetrasulphide; 2,2'-bis-(phenylmethylmethoxysilylethyl) trisulphide, 3,3'-bis-(diphenylisopropoxysilylpropyl) tetrasulphide, 3,3'-bis(diphenylcyclohexoxysilylpropyl) disulphide, 3,3'-bis(dimethylethylmercaptosilylpropyl) tetrasulphide, 2,2'-bis(methyldimethoxysilylethyl) trisulphide, 2,2'-bis(methylethoxypropoxysilylethyl) tetrasulphide, 3,3'-bis(diethylmethoxysilylpropyl) tetrasulphide, 3,3'-bis(ethyldi-S-butoxysilylpropyl) disulphide, 3,3'-bis(propyldiethoxysilylpropyl) disulphide, 3,3'-bis(butyldimethoxysilylpropyl) trisulphide, 3,3'-bis(phenyldimethoxysilylpropyl) tetrasulphide, 3-phenylethoxybutoxysilyl-3'-trimethoxysilylpropyl tetrasulphide, 4,4'-bis(trimethoxysilylbutyl) tetrasulphide, 6,6'-bis(triethoxysilylhexyl) tetrasulphide, 12,12'-bis(triisopropoxysilyldodecyl) disulphide, 18,18'-bis(trimethoxysilyloctadecyl) tetrasulphide, 18,18'-bis(tripropoxysilyloctadecenyl) tetrasulphide, 4,4'-bis(trimethoxysilylbuten-2-yl) tetrasulphide, 4,4'-bis(trimethoxysilylcyclohexylene) tetrasulphide, 5,5'-bis(dimethoxymethylsilylpentyl) trisulphide, 3,3'-bis(trimethoxysilyl-2-methylpropyl) tetrasulphide, 3,3'-bis(dimethoxyphenylsilyl-2-methylpropyl) disulphide. 3,3'-Bis(triethoxysilylpropyl) tetrasulphide is preferred according to the present invention. An example of a coupling agent which may be used in the present invention and which is currently commercially available is the product X50S® from Degussa.

For the purpose of increasing the rate and degree of crosslinking, the coating layer, as mentioned above, may also comprise a condensation catalyst.

According to a preferred embodiment, the condensation catalyst is chosen from:
- carboxylates of metals such as tin, zinc, zirconium, iron, lead, cobalt, barium, calcium and manganese, and the like, such as, for example, dibutyltin dilaurate, dibutyltin diacetate, dioctyltin dilaurate, stannous acetate, stannous caprylate, lead naphthenate, zinc caprylate, zinc naphthenate, cobalt naphthenate, iron octanoate and iron 2-ethylhexanoate, and the like;
- arylsulphonic acids or derivatives thereof such as, for example: toluenesulphonic acid, p-dodecylbenzenesulphonic acid, tetrapropylbenzenesulphonic acid, acetyl p-dodecylbenzenesulphonate, 1-naphthalenesulphonic acid, 2-naphthalenesulphonic acid, acetylmethyl sulphonate and acetyl p-toluenesulphonate, and the like;
- amines and alkanolamines such as, for example, ethylamine, dibutylamine, hexylamine, pyridine and dimethylethanolamine, and the like;
- strong inorganic acids or bases such as, for example, sodium hydroxide, potassium hydroxide, sulphuric acid or hydrochloric acid, and the like;
- organic acids such as, for example, acetic acid, stearic acid or maleic acid, and the like;
- blocked acids such as, for example, stearic anhydride or benzoic anhydride, and the like;
- zeolites modified by reaction with at least one carboxylic and/or sulphonic acid such as, for example, toluenesulphonic acid or α,β-naphthalenesulphonic acid, and the like.

For the purpose of controlling the viscosity of the crosslinkable elastomeric material according to the present invention by avoiding premature coupling reactions between the hydrolysable silane groups present on the elastomer, the coating layer, as mentioned above, may also comprise a silane of general formula (I). Specific examples of silanes of general formula (I) are: methyltriethoxysilane, n-butyltriethoxysilane, octyltriethoxysilane, triethylmethoxysilane, diphenyldimethoxysilane and dicyclohexyldiethoxysilane, and the like.

As already mentioned above, when an elastomer functionalized with at least one halogen group is used, said coating layer may also comprise a trapping agent capable of capturing the halohydric acid formed during the silanization reaction.

According to a preferred embodiment, the trapping agent is chosen from: magnesium oxide; tertiary amines such as, for example, triethylamine or N,N'-diisopropylethylamine. Magnesium oxide is particularly preferred according to the present invention.

In addition, as mentioned above, the coating layer may comprise a crosslinking agent based on sulphur or derivatives thereof which is commonly used for curing diene elastomers. To this end, in the compounds, after a first step of thermomechanical processing, a crosslinking agent based on sulphur or derivatives thereof is incorporated together with vulcanization accelerators and activators. In this second step of processing, the temperature is generally kept below 120°C, preferably below 100°C, so as to avoid undesired scorching phenomena.

The curing agent most commonly used is sulphur, or molecules containing sulphur (sulphur donors).

Activators that are particularly effective are zinc compounds, and in particular ZnO, ZnCO₃, zinc salts of saturated or unsaturated fatty acids containing from 8 to 18 carbon atoms such as, for example, zinc stearate, preferably formed in situ in the compound from ZnO and fatty acid, and also BiO, PbO, Pb₃O₄ and PbO₂, and mixtures thereof.

Accelerators that are commonly used may be chosen from: dithiocarbamates, guanidine, thiourea, thiazoles, sulphenamides, thiurams, amines and xanthates, and the like, or mixtures thereof.

Said coating layer may also comprise reinforcing fillers (for example carbon black, silica, alumina, aluminosilicates, calcium carbonate or kaolin, and the like, or mixtures thereof), antioxidants, anti-ageing agents, protective agents, plasticizers, compatibilizers for the reinforcing filler, adhesives, anti-ozone agents, modifying resins, fibres (for example Kevlar® pulp) and lubricants (for example mineral oils, vegetable oils or synthetic oils, and the like, or mixtures thereof).

The abovementioned coating layer may be prepared by mixing the polymer components with the reinforcing filler optionally present and with the other additives according to techniques known in the art. The mixing may be carried out, for example, using an open-mill mixer or an internal mixer of the type with tangential rotors (Banbury) or interlocking rotors (Intermix), or in continuous mixers of the Ko-Kneader type (Buss) or co-rotating or counter-rotating twin-screw type. The compounds according to the present invention are preferably produced in two steps. In the first step, the mixture of the various ingredients apart from the vulcanization accelerator, the condensation catalyst and the curing agent is prepared. In the second step, the remaining ingredients are added to the mixture thus obtained.

The present invention will now be further illustrated by means of a number of production examples, with reference to the attached figures, which are given purely as a guide and therefore without limitation, in which:
- Fig. 1 shows, in cross section, a tyre enclosed inside a vulcanization mould;
- Fig. 2 is a partial cutaway perspective view of a tyre produced according to the invention.

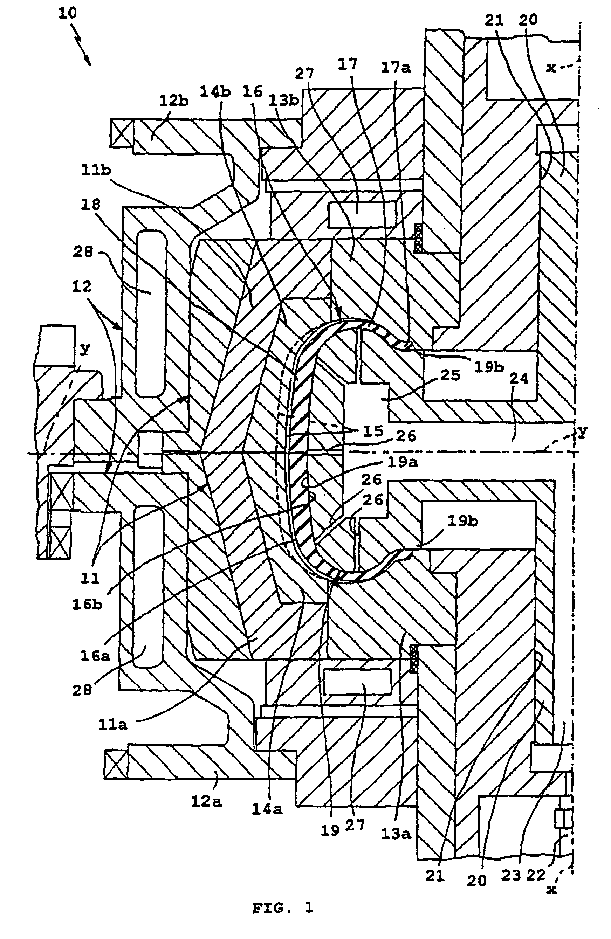

With reference to Fig. 1, (10) is a general reference for a moulding and vulcanization device for tyres of vehicle wheels.

The device (10) comprises a vulcanization mould (11) combined with a vulcanization press (12), said vulcanization press only being illustrated diagrammatically since it can be produced in any manner which is convenient to a person skilled in the art. For example, the mould (11) may be composed of a lower mould half (11a) and an upper mould half (11b) in engagement with a bed (12a) and a closing portion (12b) of press (12), respectively.

In the example illustrated for indicative purposes, each of the lower (11a) and upper (11b) mould halves of the mould (11) has a lower (13a) and upper (13b) cheek respectively, and a crown of lower (14a) and upper (14b) sectors.

The lower (11a) and upper (12b) mould halves are movable relative to each other between an open condition in which they are mutually spaced apart (not shown in Fig. 1), and a closed position, as shown in Fig. 1, in which they are disposed mutually closed to each other to form a moulding cavity (15) whose inner sides, defined by cheeks (12a) and (12b) and sectors (14a) and (14b), reproduce the geometric configuration of the outer surface (16a) of a tyre (16) to be obtained.

In more detail, cheeks (13a) and (13b) are intended to form the outer surfaces of the opposite sidewalls (17) of the tyre (16), while sectors (14a) and (14b) are intended to form the so-called tread band (18) of the tyre itself, creating a series of cuts and longitudinal and/or transverse notches and grooves therein, appropriately arranged in a "tread pattern".

The device (10) also includes the use of at least one toroidal support (19) made of metal or another solid material, having an outer surface which substantially reproduces the shape of an inner surface of the tyre (16). The toroidal support (19) conveniently consists of a collapsible drum, that is to say that it is composed of centripetally mobile circumferential segments to disassemble the toroidal support and allow it to be removed easily from the tyre (16) once processing is complete.

In accordance with the present invention, the green tyre (16) is assembled on the toroidal support (19) before this support is inserted, together with the tyre itself, into the vulcanization mould (11) set in the open position. In particular, according to the present invention, a first layer of crosslinkable elastomeric material comprising at least one elastomer containing hydrolysable silane groups corresponding to the inner surface (16b) of the tyre (16) is formed on the toroidal support (19) on which the subsequent components are then formed. This forming step is advantageously carried out by winding at least one ribbon-like band, made of said crosslinkable elastomeric material comprising at least one elastomer containing hydrolysable silane groups, in close coils along the profile in cross section of the toroidal support. Said ribbon-like band may be obtained, for example, by extruding the abovementioned elastomeric material. In this way, the toroidal support (19) is advantageously used as a rigid mould for the forming and/or deposition of the various components such as, for example, the carcass plies, bead reinforcing structures, belt strips, sidewalls and tread band, involved in the formation of the tyre itself. Further details on the modalities of forming and/or deposition of the components of the tyre (16) on the toroidal support (19) are disclosed, for example, in the abovementioned patent applications EP-A-0 943 421 and EP-A-0 919 406 in the name of the Applicant.

In this case, the geometric configuration of the inner surface of the green tyre (16) will correspond exactly to the configuration of the outer surface of the toroidal support (19).

However, as will emerge more clearly hereinbelow, it is preferably provided that the extension of the outer surface (19a) of the toroidal support (19) should be adequately smaller than the extension of the inner surface (16b) of the tyre (16) once vulcanization is complete.

The toroidal support (19) preferably has at least one centering shank (20) to be engaged in a centering seat (21) provided in the mould (11), for establishing a precise positioning of the toroidal support (19) itself and of the tyre (16) carried thereon within the moulding cavity (15). In the production solution illustrated, the toroidal support (19) has two centering shanks (20) extending from opposite sides according to a geometric axis (x) common to the toroidal support (19), the tyre (16) and the moulding cavity (15) and arranged for being fitted into corresponding centering seats (21) formed in the bed (12a) and the closing portion (12b) of the vulcanization press (12), respectively.

More particularly, the coupling between each centering shank (20) of the toroidal support (19) and the corresponding centering seat (21) formed in the mould (11) defines, between each cheek (13a) and (13b) of the mould itself and the corresponding inner circumferential edge (19b) of the toroidal support (19), a housing seat for a radially internal edge (17a) of the tyre (16), usually known as the tyre "bead". Said bead seats ensure precise geometric moulding of the beads (17a) since the geometry is determined by the direct coupling between the rigid surfaces of the toroidal support (19) and of the cheeks (13a) and (13b) of the mould (11).

In addition, the abovementioned bead seats ensure stable and precise centering of the tyre (16) relative to the axis (y) of the moulding cavity (15).

Preferably, the toroidal support (19) is also designed so as to have, at least at the regions corresponding to the beads (17a) of the tyre (16), an elastically yielding structure in an axial direction, following the mutual approaching of the cheeks (13a) and (13b) during the closing step of the mould (11).

The axial deformation which the toroidal support (19) undergoes in the zones of contact with the cheeks (13a) and (13b) in the vicinity of the beads (17a) of the tyre is preferably comprised between 0.3 mm and 0.5 mm, so as to generate on the surfaces in contact with the corresponding cheeks (13a) and (13b) a specific pressure comprised between 18 bar and 25 bar. Said contact pressure, during the step of moulding and curing the tyre (16), prevents any escape of elastomeric material between the surfaces in mutual contact of the toroidal support (19) and of the cheeks (13a) and (13b), thus avoiding the consequent formation of flash.

Once the positioning of the toroidal support (19) with the tyre (16) on the lower portion (11a) of the mould (11) has been carried out, the mould itself is placed in the closed position.

As may be seen in Fig. 1, when the mould (11) is closed, the walls of the moulding cavity (15) remain at a certain distance from the outer surface of the tyre (16), particularly in the tread band (18) of the latter. In this step, the tread band (18) may, however, be partially penetrated by reliefs located on the sectors (14a) and (14b) to define the abovementioned tread pattern.

Still on closure of the mould (11), each of the inner circumferential edges (17a) of the tyre (16) is sealingly engaged between the inner circumferential portions of the toroidal support (19) and inner circumferential portions of the lower (13a) and upper (13b) cheeks. The tyre (16) will remain sealingly engaged in the mould (11) in the manner described above until the moment at which, at the end of the moulding and curing cycle, the mould (11) itself will be brought again to its open position.

Once the mould closure has been completed (11), the tyre (16) is submitted to a pressing step with its outer surface (16a) against the walls of the moulding cavity (15), concomitant with the application of heat, so as to cause molecular crosslinking of the tyre itself and consequent geometrical and structural stabilization of the latter.

To this end, the device (10) is provided with pressing means comprising at least one primary duct (22) for feeding of a fluid under pressure, formed in bed (12a) of the press (11) for example, and opening into one of the centering seats (21) for sending a fluid under pressure to at least one connecting duct (23) made, preferably coaxially, along at least one of the centering shanks (20).

The connecting duct (23) terminates, for example through suitable branches (24) made radially in the toroidal support (19), at an annular chamber (25) present inside the toroidal support (19) itself. From the annular chamber (25) extends, through the toroidal support (19), a plurality of channels for feeding of fluid under pressure (26) which open into the outer surface (19a) of the toroidal support (19) itself and suitably distributed over the circumferential extension of said support.

The fluid under pressure fed from the primary duct (22) reaches the feeding channels (26) via the connecting duct (23), the radial branches (24) and the annular chamber (25), then opening onto the outer surface (19a) of the toroidal support (19). The fluid under pressure is thus introduced into a diffusion interspace created between the outer surface (19) of the toroidal support and the inner surface (16b) of the tyre (16) in which the feeding channels come together. Said inner surface (16b), as already mentioned above, consists of a layer of crosslinkable elastomeric material comprising at least one elastomer containing hydrolysable silane groups capable of crosslinking within the first moments of introduction of said fluid under pressure, and of thereby avoiding the diffusion of the fluid into the green tyre (16).

According to one embodiment of the present invention, the abovementioned diffusion interspace may be created directly as a result of an expansion of the tyre (16) brought about under the effect of the force exerted by the fluid under pressure. In other words, the pressing of the tyre (16) against the walls of the moulding cavity (15) takes place concomitantly with an expansion imposed on the tyre (16) itself, until its outer surface (16a) is brought to completely adhere to the inner walls of the moulding cavity (15).

Alternatively, according to another embodiment, the abovementioned diffusion interspace may be at least partially defined by a surface lowering provided on the outer surface (19a) of the toroidal support (19). In this case also, an expansion of the tyre (16) may be obtained concomitantly with the pressing step following from introduction of the fluid under pressure, which increases the volume of the diffusion interspace.

According to a preferred embodiment, the fluid under pressure introduced into the diffusion interspace consists of steam, said steam optionally being mixed with nitrogen or another inert gas.

A heating fluid may advantageously be introduced into said diffusion interspace so as to supply heat to the toroidal support (19) from the inside outwards. Said heating fluid may consist of or at least comprise the same fluid under pressure. In this case, the steam may be, preferably, overheated to a temperature preferably comprised between 170°C and 210°C and fed in at a pressure gradually increasing up to a value comprised between 16 bar and 30 bar, preferably about 18 bar. Consequently, the abovementioned primary duct (22) and connecting duct (23), and also the radial branches (24), the annular chamber (25) and the feeding channels (26) together with further ducts (27) and (28) adjacent to the cheeks (13a) and (13b) and to the sectors (14a) and (14b) of the mould (17) supplied with pressurized steam at high temperature, also act as means for heating the walls of the mould (11) in order to supply to tyre (16), from the outside inwards, the heat required for the molecular crosslinking of the tyre itself.

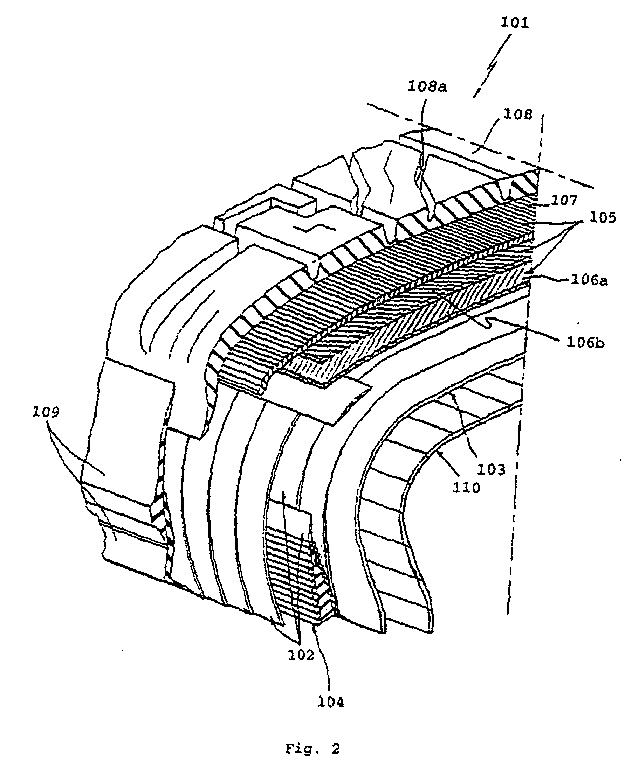

With reference to Fig. 2, the tyre (100) essentially comprises a carcass structure (102) having at least a first rubberized carcass ply (103) shaped in a substantially toroidal configuration and engaged, by means of its opposite circumferential edges, to a pair of inextensible annular structures (104) commonly known as "bead wires" which, once the tyre is finished, are located in the zone usually referred to as the bead. The opposite lateral edges of the abovementioned carcass ply (103) are coupled with respective bead wires (104). Alternatively, coupling between the carcass ply (103) and the bead wires (104) may be achieved by folding back the opposite lateral edges of the carcass ply (103) around the bead wires (104), so as to form the abovementioned carcass back-folds (not shown in Fig. 2).

The rubberized carcass ply (103) generally consists of a plurality of reinforcing cords arranged parallel to each other and at least partially coated with a layer of elastomeric compound. These reinforcing cords usually consist of steel wires which are stranded together, coated with a metal alloy (for example copper/zinc, zinc/manganese or zinc/molybdenum/cobalt alloys, and the like).

The rubberized carcass ply (103) is usually of radial type, i.e. it incorporates reinforcing cords arranged in a substantially perpendicular direction relative to a circumferential direction.

A belt structure (105) comprising one or more belt strips (106a), (106b) and (107) is applied to the carcass structure (102), in a circumferentially external position. In the specific embodiment of Fig. 2, the belt structure (105) comprises two belt strips (106a) and (106b), which incorporate a plurality of reinforcing cords, typically metal cords, parallel to each other in each strip and oblique with respect to the adjacent strip, oriented so as to form a predetermined angle with respect to a circumferential direction. The belt structure (105) may optionally comprise at least one reinforcing layer (107) at 0° commonly known as a "0° belt", placed on the radially outermost belt strip (106b), which generally incorporates a plurality of reinforcing cords, typically textile cords, arranged at an angle of a few degrees with respect to a circumferential direction, coated and welded together by means of an elastomeric material.

A tread band (108) is superimposed circumferentially on the belt structure (105) and on it, after a moulding operation carried out concomitantly with the curing of the tyre, are made longitudinal and/or transverse grooves (108) arranged so as to define a desired "tread pattern".

The tyre (100) also comprises a pair of sidewalls (109) applied laterally to the opposite sides of the carcass structure (102). A strip made of elastomeric material (not shown in Fig. 2) commonly known as a "mini-sidewall" may optionally be present in the connecting zone between the sidewalls (109) and the tread band (108), which is generally obtained by co-extrusion with the tread band and makes it possible to improve the mechanical interaction between the tread band (108) and the sidewalls (109).

In the case of tubeless tyres, a further coating layer (not shown in Fig. 2) may also be provided in a radially internal position with respect to the rubberized carcass ply (103), over the coating layer (110) according to the present invention. This further coating layer can further ensure impermeability to a fluid for inflating the tyre when this tyre is installed on a rim and inflated.

The present invention will be further illustrated hereinbelow with the aid of a number of production examples, given purely for indicative purposes and without any limitation thereof.

### EXAMPLES 1-8

The compounds given in Table 1 (phr) were prepared as follows.

All the components given in Table 1, except for ZnO, DBTL, sulphur and TBBS, were mixed together in an internal mixer (Pomini PL 1.6 model). AMEO, MgO, stearic acid and antioxidant were mixed together beforehand with carbon black before being introduced into the internal mixer. After about 5 minutes and, in any case, as soon as the temperature reached 125 ± 5°C, the abovementioned compound was removed from the reactor (1st step).

Said compound was introduced into an open laboratory mixer and the missing components, i.e. ZnO, DBTL, sulphur and TBBS, were added (2nd step).

**TABLE 1**

| EXAMPLE | 1 | 2 | 3 | 4 | 5 | 6 | 7 | 8 |
|---|---|---|---|---|---|---|---|---|
| 1^{ST} STEP | | | | | | | | |
| NR | 30 | 30 | 30 | 30 | 30 | 30 | 30 | 30 |
| CIIR | 70 | 70 | 70 | 70 | 70 | 70 | 70 | 70 |
| Carbon black | 60 | 60 | 60 | 60 | 60 | 60 | 60 | 60 |
| Aromatic oil | 10 | 10 | 10 | 10 | 10 | 10 | 10 | 10 |
| Stearic acid | 2 | 2 | 2 | 2 | 2 | 2 | 2 | 2 |
| Antioxidant | 0.5 | 0.5 | 0.5 | 0.5 | 0.5 | 0.5 | 0.5 | 0.5 |
| Magnesium oxide | - | 2 | 2 | 2 | 2 | 2 | 2 | 2 |
| Calcium oxide | - | - | 3 | - | - | - | - | - |
| AMEO | - | 2 | 2 | 2 | 2 | 2 | 2 | 2 |
| TESPT | - | 1 | 1 | 1 | 0.5 | - | - | 1 |

| 2^{ND} STEP | | | | | | | | |
|---|---|---|---|---|---|---|---|---|
| ZnO | 3 | 3 | 3 | 3 | 3 | 3 | 3 | - |
| DBTL | - | 0.1 | 0.1 | - | 0.1 | 0.1 | - | 0.1 |
| TBBS | 0.7 | 0.7 | 0.7 | 0.7 | 0.7 | 0.7 | 0.7 | - |
| Sulphur | 1.3 | 1.3 | 1.3 | 1.3 | 1.3 | 1.3 | 1.3 | - |
| NR: Natural rubber; | | | | | | | | |
| CIIR: Chlorinated isobutylene/isoprene copolymer with a halogen content of 1.2% by weight (Polysar® Chlorobutyl 1240 from Bayer); | | | | | | | | |
| Carbon black: N660 (Cabot); | | | | | | | | |
| Antioxidant: Phenyl-p-phenylenediamine; | | | | | | | | |
| AMEO: 3-Aminopropyltriethoxysilane (Dynasylan® AMEO (A-1100) from Sivento Chemie); | | | | | | | | |
| TESPT: 3,3'-bis(3-triethoxysilylpropyl) tetrasulphide (X50S comprising 50% carbon black and 50% silane, from Degussa - the amount given is relative to the amount of silano); | | | | | | | | |
| DBTL: Dibutyltin dilaurate; | | | | | | | | |
| TBBS: N-t-Butyl-2-benzothiazilesulphenamide (Vulkacit NZ from Bayer). | | | | | | | | |

The compounds described above were subjected to MDR rheometric analysis using a Monsanto MDR rheometer, the tests being carried out at 135°C for 30 minutes at an oscillation frequency of 1.66 Hz (100 oscillations per minute) and an oscillation amplitude of ± 0.5°.

The mechanical properties were measured in accordance with ISO 37 standard on samples obtained by curing the abovementioned compositions at 160°C for 20 minutes, and the data obtained are given in Table 2.

**TABLE 2**

| EXAMPLE | 1 | 2 | 3 | 4 | 6 | 6 | 7 | 8 |
|---|---|---|---|---|---|---|---|---|
| MDR (30 min at 135°C) | | | | | | | | |
| Δ torque | 7.57 | 7.32 | 7.30 | 6.58 | 6.83 | 6.09 | 6.46 | 1.02 |
| T05 (min.) | 4.19 | 0.93 | 1.05 | 1.02 | 0.90 | 0.86 | 1.41 | - |
| TS1 (min.) | 8.67 | 1.54 | 1.77 | 1.84 | 1.49 | 1.47 | 2.16 | 27.9 |
| T30 (min.) | 12.83 | 2.65 | 2.94 | 3.30 | 2.44 | 2.32 | 2.90 | - |
| T60 (min.) | 17.15 | 7.10 | 7.46 | 9.24 | 6.59 | 6.58 | 5.34 | - |

| VULCANIZATION (20 min at 160°C) | | | | | | | | |
|---|---|---|---|---|---|---|---|---|
| 100% modulus | 2.64 | 2.24 | 1.79 | 1.95 | 2.22 | 1.96 | 2.03 | 0.73 |

### EXAMPLE 9

The compound of Example 2 was used to prepare the coating layer of some P6000 205/60R15 tyres. The tyres were manufactured using a device as shown in Fig. 1, using steam as fluid under pressure. After curing, the tyres were examined visually and no drawbacks were found such as, for example, the presence of bubbles or fissures either on the liner or on the carcass, or the presence of any bubbles visible from the outside in the region of the sidewalls and the "mini-sidewalls", caused by permeation of the steam into the structure of the tyre.

## Claims

1. Process for manufacturing, moulding and curing tyres for vehicle wheels, comprising the following steps:
- forming at least one coating layer made of crosslinkable elastomeric material on an outer surface of a toroidal support the shape of which substantially matches that of the inner surface of the tyre;
- manufacturing a green tyre comprising at least one element which includes a crosslinkable elastomeric material on said toroidal support bearing said coating layer;
- closing the green tyre in a moulding cavity defined inside a vulcanization mould, said moulding cavity having walls the shape of which matches that of an outer surface of the tyre once vulcanization is complete;
- introducing into the space defined by an inner surface of the tyre a fluid under pressure to press the outer surface of the green tyre against the walls of the moulding cavity;
- applying heat to the tyre for causing the vulcanization of the crosslinkable elastomeric material;
**characterized in that** said coating layer comprises at least one elastomer containing hydrolysable silane groups.

2. Process according to Claim 1, in which said coating layer comprises a crosslinking agent based on sulphur or derivatives thereof.

3. Process according to Claim 1 or 2, in which the coating layer reaches a degree of crosslinking which is sufficient to prevent the diffusion and penetration of the fluid under pressure into the green tyre, within a period not greater than 10 minutes, working at a temperature not greater than 210°C.

4. Process according to Claim 3, in which said coating layer reaches a degree of crosslinking which is sufficient to prevent the diffusion and penetration of the fluid under pressure into the green tyre within a period of between 1 minute and 5 minutes.

5. Process according to Claim 3 or 4, in which the coating layer reaches a degree of crosslinking which is sufficient to prevent the diffusion and penetration of the fluid under pressure into the green tyre, working at a temperature of between 100°C and 140°C.

6. Process according to any one of the preceding claims, in which the fluid under pressure is chosen from steam, air and nitrogen, or mixtures thereof.

7. Process according to Claim 6, in which the fluid under pressure is steam.

8. Process according to any one of the preceding claims, in which the coating layer comprises from 20 phr to 100 phr of at least one elastomer containing hydrolysable silane groups.

9. Process according to Claim 8, in which the coating layer comprises from 50 phr to 90 phr of at least one elastomer containing hydrolysable silane groups.

10. Process according to any one of the preceding claims, in which the elastomer containing hydrolysable silane groups comprises from 0.1% to 5% by weight of hydrolysable silane groups.

11. Process according to Claim 10, in which the elastomer containing hydrolysable silane groups comprises from 0.5% to 3% by weight of hydrolysable silane groups.

12. Process according to any one of the preceding claims, in which the coating layer comprises from 0 phr to 30 phr of at least one butyl rubber.

13. Process according to Claim 12, in which the coating layer comprises from 5 phr to 15 phr of at least one butyl rubber.

14. Process according to any one of the preceding claims, in which the coating layer comprises from 0 phr to 80 phr of at least one diene elastomer other than butyl rubber.

15. Process according to Claim 14, in which the coating layer comprises from 10 phr to 50 phr of at least one diene elastomer other than butyl rubber.

16. Process according to any one of the preceding claims, in which the coating layer comprises from 0 phr to 3 phr of a coupling agent.

17. Process according to Claim 16, in which the coating layer comprises from 0.5 phr to 1.5 phr of a coupling agent.

18. Process according to any one of the preceding claims, in which the coating layer comprises from 0 phr to 0.5 phr of a condensation catalyst.

19. Process according to Claim 18, in which the coating layer comprises from 0.05 phr to 0.15 phr of a condensation catalyst.

20. Process according to any one of the preceding claims, in which the coating layer comprises from 0 phr to 5 phr of a silane of general formula (I): 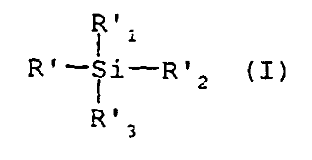 in which:
- R' is chosen from C₁-C₁₈ alkyl groups, C₆-C₂₀ aryl groups, C₇-C₃₀ alkylaryl or arylalkyl groups, C₃-C₃₀ cycloalkyl groups, said cycloalkyl groups optionally being substituted with C₁-C₁₈ alkyl groups;
- R'₁, R'₂ and R'₃, which may be identical or different, are chosen from hydrogen, C₁-C₈ alkoxy groups, C₁-C₁₈ alkyl groups, C₆-C₂₀ aryl groups, C₇-C₃₀ alkylaryl or arylalkyl groups, on condition that at least one of the groups R'₁, R'₂ and R'₃ represents an alkoxy group.

21. Process according to Claim 20, in which the coating layer comprises from 0.5 phr to 3 phr of a silane of general formula (I).

22. Process according to any one of the preceding claims, in which the elastomer containing hydrolysable silane groups is obtained by reacting an elastomer containing at least one functional group with a silane containing at least one hydrolysable group and at least one reactive group which is capable of reacting with said functional group of the elastomer.

23. Process according to Claim 22, in which the elastomer containing at least one functional group is an elastomer containing at least one halogen functional group chosen from chlorine and bromine.

24. Process according to Claim 22, in which the elastomer containing at least one functional group is an elastomer containing at least one functional group chosen from:
- anhydride groups -(RCO)₂O in which R is an alkylene group;
- carboxyl groups -COOH;
- ester groups -COOR in which R is an alkyl or aryl group;
- amide groups -CONH₂.

25. Process according to Claim 23, in which the coating layer comprises from 0.1 phr to 4 phr of a trapping agent.

26. Process according to Claim 25, in which the coating layer comprises from 1 phr to 3 phr of a trapping agent.

27. Process according to any one of Claims 22 to 26, in which the reactive group of the silane is chosen from amine groups and epoxide groups.

28. Process according to any one of Claims 22 to 27, in which the silane is used in an amount of between 0.1 phr and 5 phr.

29. Process according to Claim 28, in which the silane is used in an amount of between 0.5 phr and 3 phr.

30. Process according to Claim 23, in which the elastomer containing a halogen functional group is chosen from halobutyl rubbers, epihalohydrin rubbers and halogenated isobutylene/p-alkylstyrene copolymers.

31. Process according to any one of Claims 22 to 30, in which the silane containing at least one hydrolysable group and at least one reactive group which is capable of reacting with the abovementioned functional groups is an aminosilane of general formula (II): 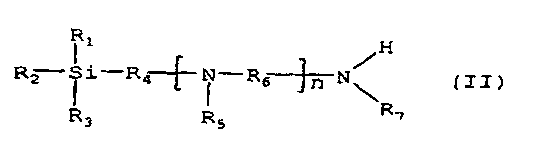 in which:
- R₁, R₂ and R₃, which may be identical or different, are chosen from hydrogen, C₁-C₈ alkoxy groups, C₁-C₁₈ alkyl groups, C₆-C₂₀ aryl groups, C₇-C₃₀ alkylaryl or arylalkyl groups, on condition that at least one of the groups R₁, R₂ and R₃ represents an alkoxy group;
- R₄ is chosen from C₁-C₁₈ alkylene groups, C₆-C₂₀ arylene groups, said arylene groups optionally being substituted with C₁-C₈ alkyl groups;
- R₅ and R₇, which may be identical or different, are chosen from hydrogen, C₁-C₁₈ alkyl groups; or, when R₅ and R₇ are other than hydrogen, they may form, together with the nitrogen atoms to which they are attached, 5- or 6-membered heterocyclic rings;
- R₆ is chosen from C₁-C₁₈ alkylene groups, C₆-C₁₄ arylene groups, arylene groups optionally substituted with C₁-C₁₈ alkyl groups, C₇-C₃₀ alkylenearylene or arylenealkylene groups, C₃-C₃₀ cycloalkylene groups, said cycloalkylene groups optionally being substituted with C₁-C₁₈ alkyl groups;
- n is a integer from 0 to 5.

32. Process according to Claim 31, in which R₁, R₂ and R₃ are C₁-C₃ alkoxy groups, R₄ is a C₁-C₃ alkylene group, R₇ is hydrogen and n is 0.

33. Process according to any one of Claims 22 to 30, in which the silane containing at least one reactive group which is capable of reacting with the abovementioned functional groups is an epoxy silane.

34. Process according to Claim 33, in which the epoxysilane is chosen from: 3-glycidyloxypropyltrimethoxysilane, 3-glycidyloxypropylmethyldimethoxysilane and 2-(3,4-epoxycyclohexyl)ethyltrimethoxysilane.

35. Process according to Claim 12 or 13, in which the butyl rubber is chosen from copolymers containing from about 95.5% to about 99.5% isobutylene and from about 0.5% to about 4.5% isoprene.

36. Process according to Claim 14 or 15, in which the diene elastomer is chosen from natural and synthetic rubbers, optionally oil-extended, such as natural rubber; polybutadiene; polyisoprene; styrene/butadiene copolymers; butadiene/isoprene copolymers; styrene/isoprene copolymers; nitrile rubbers; terpolymers of ethylene, propylene and unconjugated dienes such as 5-ethylidene-2-norbornene, 1,4-hexadiene, cyclooctadiene or dicyclopentadiene; or mixtures thereof.

37. Process according to Claim 16 or 17, in which the coupling agent contains at least one hydrolysable silane group and at least one sulphur atom.

38. Process according to Claim 37, in which the coupling agent is a compound of formula (III):
Z-Alk-Sₙ-Alk-Z (III)
in which Z is chosen from the following groups: -Si(R₁)₂(R₂), -Si(R₁)(R₂)₂ and -Si(R₂)₃, in which R₁ is a C₁-C₄ alkyl group, a cyclohexyl group or a phenyl group and R₂ is a C₁-C₁₈ alkoxy group or a C₅-C₈ cycloalkoxy group; Alk is a divalent hydrocarbon containing from 1 to 18 carbon atoms and n is a number from 2 to 8.

39. Process according to Claim 18 or 19, in which the condensation catalyst is chosen from:
- metal carboxylates;
- arylsulphonic acids or derivatives thereof;
- amines and alkanolamines;
- strong inorganic acids or bases;
- organic acids;
- blocked acids;
- zeolites modified by reaction with at least one carboxylic and/or sulphonic acid.

40. Process according to Claim 25 or 26, in which the trapping agent is chosen from: magnesium oxide, tertiary amines such as triethylamine or N,N'-diisopropylethylamine.

41. Tyre for a vehicle wheel, comprising the following elements:
- a carcass structure having at least one rubberized carcass ply shaped in a substantially toroidal configuration and engaged, by means of its opposite circumferential edges, to a pair of inextensible annular structures;
- a belt structure comprising at least one belt strip applied in a circumferentially external position relative to said carcass structure;
- a tread band circumferentially superimposed on said belt structure;
- a pair of sidewalls applied laterally to opposite sides relative to said carcass structure;
- a coating layer made of crosslinked elastomeric material placed in a radially internal position relative to said rubberized carcass ply;
**characterized in that** said coating layer is obtained by crosslinking at least one elastomer containing hydrolysable silane groups.

42. Tyre according to Claim 41, in which the crosslinking of said coating layer is obtained in the presence of a crosslinking agent based on sulphur or derivatives thereof.

43. Tyre according to Claim 41 or 42, in which the coating layer is defined in any one of Claims 8 to 39.

44. Tyre according to any one of Claims 41 to 43, in which the coating layer is the layer which is impermeable to a fluid for inflating the tyre when this tyre is installed on a wheel rim.

## Patentansprüche

1. Verfahren zur Herstellung, zur Ausformung und zum Vulkanisieren von Reifen für Fahrzeugräder wobei das Verfahren die folgenden Schritte aufweist:
- Ausbilden wenigstens einer Überzugsschicht aus vernetzbarem elastomeren Material auf einer Außenfläche eines toroidförmigen Trägers dessen Form im Wesentlichen an die der Innenfläche des Reifens angepasst ist,
- Herstellen eines Rohreifens, des wenigstens ein Element mit einem vernetzbaren elastomeren Material aufweist, auf dem toroidförmigen Träger, der die Überzugsschicht trägt,
- Einschließen des Rohreifens in einen Formhohlraum, der im Innern einer Vulkanisierform ausgebildet ist, wobei der Formhohlraum Wände hat, deren Form einer Außenfläche des Reifens angepasst ist, wenn die Vulkanisierung abgeschlossen ist,
- Einführen eines Druckfluids in den von einer Innenfläche des Reifens gebildeten Raum, um die Außenfläche des Rohreifens gegen die Wände des Formhohlraums zu drücken und
- Zuführen von Wärme zu dem Reifen zur Herbeiführung der Vulkanisierung des vernetzbaren elastomeren Materials
**dadurch gekennzeichnet,**
- **dass** die Überzugsschicht wenigstens ein Elastomer aufweist, das hydrolysierbare Silangruppen enthält.

2. Verfahren nach Anspruch 1, bei welchem die Überzugsschicht ein Vernetzungsmittel basierend auf Schwefel oder Derivaten davon aufweist.

3. Verfahren nach Anspruch 1 oder 2, bei welchem die Überzugsschicht einen Vernetzungsgrad, der ausreicht, die Diffusion und das Eindringen des Druckfluids in den Rohreifen zu verhindern, innerhalb eines Zeitraums von nicht mehr als 10 Minuten bei einer Temperatur von nicht mehr als 210°C erreicht.

4. Verfahren nach Anspruch 3, bei welchem die Überzugsschicht einen Vernetzungsgrad, der ausreicht, die Diffusion und das Einbringen des Druckfluids in den Rohreifen zu verhindern, innerhalb eines Zeitraums zwischen 1 Minute und 5 Minuten erreicht.

5. Verfahren nach Anspruch 3 oder 4, bei welchem die Überzugsschicht einen Vernetzungsgrad, der ausreicht, die Diffusion und das Eindringen des Druckfluids in den Rohreifen zu verhindern, bei einer Temperatur zwischen 100°C und 140°C erreicht.

6. Verfahren nach einem der vorhergehenden Ansprüche, bei welchem das Druckfluid aus Wasserdampf, Luft und Stickstoff oder Mischungen davon ausgewählt wird.

7. Verfahren nach Anspruch 6, bei welchem das Druckfluid Wasserdampf ist.

8. Verfahren nach einem der vorhergehenden Ansprüche, bei welchem die Überzugsschicht von 20 phr bis 100 phr wenigstens eines Elastomers aufweist, das hydrolysierbare Silangruppen enthält.

9. Verfahren nach Anspruch 8, bei welchem die Überzugsschicht von 50 phr bis 90 phr wenigstens eines Elastomers aufweist, das hydrolysierbare Silangruppen enthält.

10. Verfahren nach einem der vorhergehenden Ansprüche, bei welchem das hydrolysierbare Silangruppen enthaltende Elastomer von 0,1 Gew.% bis 5 Gew.% hydolysierbare Silangruppen aufweist.

11. Verfahren nach Anspruch 10, bei welchem das hydrolysierbare Silangruppen enthaltende Elastomer von 0,5 Gew.% bis 3 Gew.% hydrolysierbare Silangruppen aufweist.

12. Verfahren nach einem der vorhergehenden Ansprüche, bei welchem die Überzugsschicht von 0 phr bis 30 phr wenigstens eines Butylkautschuks aufweist.

13. Verfahren nach Anspruch 12, bei welchem die Überzugsschicht von 5 phr bis 15 phr wenigstens eines Butylkautschuks aufweist.

14. Verfahren nach einem der vorhergehenden Ansprüche, bei welchem die Überzugsschicht von 0 phr bis 80 phr wenigstens eines Dienelastomers anstatt Butylkautschuk aufweist.

15. Verfahren nach Anspruch 14, bei welchem die Überzugsschicht von 10 phr bis 50 phr wenigstens eines Dienelastomers anstelle von Butylkautschuk aufweist.

16. Verfahren nach einem der vorhergehenden Ansprüche, bei welchem die Überzugsschicht von 0 phr bis 3 phr eines Haftvermittlers aufweist.

17. Verfahren nach Anspruch 16, bei welchem die Überzugsschicht von 0,5 phr bis 1,5 phr eines Haftvermittlers aufweist.

18. Verfahren nach einem der vorhergehenden Ansprüche, bei welchem die Überzugsschicht von 0 phr bis 0,5 phr eines Kondensationskatalysators aufweist.

19. Verfahren nach Anspruch 18, bei welchem die Überzugsschicht von 0,05 phr bis 0,15 phr eines Kondensationskatalysators aufweist.

20. Verfahren nach einem der vorhergehenden Ansprüche, bei welchem die Überzugsschicht von 0 phr bis 5 phr eines Silans der allgemeinen Formel (I) aufweist: 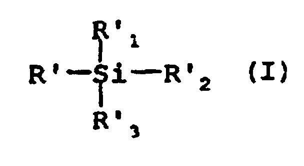 wobei
- R' aus C₁ bis C₁₈ Alkyl-Gruppen, C₆ bis C₂₀ Aryl-Gruppen, C₇ bis C₃₀ Alkylaryl- oder Arylalkyl-Gruppen, und C₃ bis C₃₀ Cycloalkyl-Gruppen ausgewählt wird, wobei die Cycloalkyl-Gruppen ggf. mit C₁ bis C₁₈ Alkyl-Gruppen substituiert sein können und
- R'₁ , R'₂ und R'₃, die identisch oder unterschiedlich sein können, aus Wasserstoff C₁ bis C₈ -Alkoxy-Gruppen, C₁ bis C₁₈ - Alkyl-Gruppen, C₆ bis C₂₀ - Aryl-Gruppen, C₇ bis C₃₀ - Alkylaryl- oder Arylalkyl-Gruppen unter der Bedingung ausgewählt werden, dass wenigstens eine der Gruppen R'₁ , R'₂ und R'₃ eine Alkoxy-Gruppe darstellt.

21. Verfahren nach Anspruch 20, bei welchem die Überzugsschicht von 0,5 phr bis 3 phr eines Silans der allgemeinen Formel (I) aufweist.

22. Verfahren nach einem der vorhergehenden Ansprüche, bei welchem das hydrolysierbare Silangruppen enthaltende Elastomer dadurch erhalten wird, dass ein Elastomer, das wenigstens eine funktionelle Gruppe enthält, mit einem Silan reagiert, das wenigstens eine hydrolysierbare Gruppe und wenigstens eine reaktive Gruppe enthält, die in der Lage ist, mit der funktionellen Gruppe des Elastomers zu reagieren.

23. Verfahren nach Anspruch 22, bei welchem das Elastomer, das wenigstens eine funktionelle Gruppe enthält, ein Elastomer ist, das wenigstens eine funktionelle Halogengruppe enthält, die aus Chlor und Brom ausgewählt wird.

24. Verfahren nach Anspruch 22, bei welchem das Elastomer, das wenigstens eine funktionelle Gruppe enthält, ein Elastomer ist, das wenigstens eine funktionelle Gruppe enthält, die ausgewählt wird aus
- Anhydrid-Gruppen -(RCO)₂O, worin R eine Alkylen-Gruppe ist,
- Carboxyl-Gruppen -COOH,
- Ester-Gruppen -COOR, wobei R eine Alkyl- oder Aryl-Gruppe ist und
- Amid-Gruppen -CONH₂.

25. Verfahren nach Anspruch 23, bei welchem die Überzugsschicht von 0,1 phr bis 4 phr eines Einfangmittels aufweist.

26. Verfahren nach Anspruch 25, bei welchem die Überzugsschicht von 1 phr bis 3 phr eines Einfangmittels aufweist.

27. Verfahren nach einem der Ansprüche 22 bis 26, bei welchem die reaktive Gruppe des Silans ausgewählt wird aus Amin-Gruppen und Epoxid-Gruppen.

28. Verfahren nach einem der Ansprüche 22 bis 27, bei welchem das Silan in einer Menge zwischen 0,1 phr und 5 phr verwendet wird.

29. Verfahren nach Anspruch 28, bei welchem das Silan in einer Menge zwischen 0,5 phr und 3 phr verwendet wird.

30. Verfahren nach Anspruch 23, bei welchem das eine funktionelle Halogengruppe enthaltende Elastomer ausgewählt wird aus Halogenbutylkautschuken, Epihalogenhydrinkautschuken und halogenierten Isobutylen-/p-Alkylstyrol-Copolymeren.

31. Verfahren nach einem der Ansprüche 22 bis 30, bei welchem das Silan, das wenigstens eine hydrolysierbare Gruppe und wenigstens eine reaktive Gruppe enthält, die in der Lage ist, mit den oben erwähnten funktionellen Gruppen zu reagieren, ein Aminosilan mit der allgemeinen Formel (II) ist: 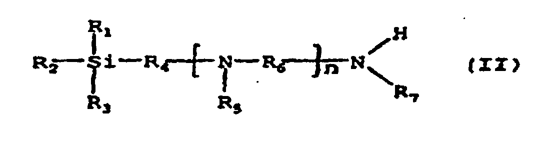 wobei
- R₁ , R₂ und R₃, die identisch oder unterschiedlich sein können, ausgewählt werden aus Wasserstoff, C₁ bis C₈ - Alkoxy-Gruppen, C₁ bis C₁₈-Alkyl-Gruppen, C₆ bis C₂₀ - Aryl-Gruppen, C₇ bis C₃₀ - Alkylaryl- oder Arylalkyl-Gruppen unter der Bedingung, dass wenigstens eine der Gruppen R₁ , R₂ und R₃ eine Alkoxy-Gruppe darstellt,
- R₄ ausgewählt wird aus C₁ bis C₁₈ - Alkylen-Gruppen, C₆ bis C₂₀ - Arylen-Gruppen, wobei die Arylen-Gruppen ggf. mit C₁ bis C₈ -Alkyl-Gruppen substituiert sein können,
- R₅ und R₇, die identisch oder unterschiedlich sein können, ausgewählt werden aus Wasserstoff, C₁ bis C₁₈ - Alkyl-Gruppen oder, wenn R₅ und R₇ kein Wasserstoff sind, sie zusammen mit den Stickstoffatomen, an denen sie gebunden sind, 5- oder 6-gliedrige heterozyklische Ringe bilden können,
- R₆ ausgewählt wird aus C₁ bis C₁₈ - Alkylen-Gruppen, C₆ bis C₁₄ - Arylen-Gruppen, die ggf. mit C₁ bis C₁₈ - Alkyl-Gruppen substituiert sind, C₇ bis C₃₀ - Alkylenarylen- oder -Arylenalkylen-Gruppen, C₃ bis C₃₀
- Cycloalkylen-Gruppen, wobei die Cycloalkylen-Gruppen ggf. mit C₁ bis C₁₈ - Alkyl-Gruppen substituiert sein können, und
- n eine ganze Zahl von 0 bis 5 ist.

32. Verfahren nach Anspruch 31, bei welchem R₁, R₂ und R₃ C₁ bis C₃ - Alkoxy-Gruppen, R₄ eine C₁ bis C₃ - Alkylen-Gruppe, R₇ Wasserstoff und n gleich 0 sind.

33. Verfahren nach einem der Ansprüche 22 bis 30, bei welchem das Silan, das wenigstens eine reaktive Gruppe enthält, die in der Lage ist, mit den oben erwähnten funktionellen Gruppen zu reagieren, ein Epoxysilan ist.

34. Verfahren nach Anspruch 33, bei welchem das Epoxysilan ausgewählt wird aus 3-Glycidyloxypropyltrimethoxysilan, 3-Glycidyloxypropylmethyldimethoxysilan und 2- (3,4-Epoxycyclohexyl) ethyltrimethoxysilan.

35. Verfahren nach Anspruch 12 oder 13, bei welchem der Butylkautschuk ausgewählt wird aus Copolymeren, die von etwa 95,5% bis etwa 99,5% Isobutylen und von etwa 0,5% bis etwa 4,5% Isopren enthalten.

36. Verfahren nach Anspruch 14 oder 15, bei welchem das Dien-Elastomer aus natürlichen und synthetischen Kautschuken ausgewählt wird, die wahlweise ölgestreckt sind, beispielsweise Naturkautschuk, Polybutadien, Polyisopren, Styrol-/Butadien Copolymere, Butadien/Isopren Copolymere, Styrol/Isopren Copolymere, Nitrilkautschuke, Terpolymere von Ethylen, Propylen und unkonjugierten Dienen, wie 5-Ethyliden-2-norbornen, 1,4-Hexadien, Cyclooctadien oder Dicyclopentadien, oder Mischungen davon.

37. Verfahren nach Anspruch 16 oder 17, bei welchem der Haftvermittler wenigstens eine hydrolysierbare Silangruppe und wenigstens ein Schwefelatom enthält.

38. Verfahren nach Anspruch 37, bei welchem der Haftvermittler eine Verbindung der Formel (III) ist:
Z-Alk-Sₙ-Alk-Z (III)
wobei Z ausgewählt wird aus den folgenden Gruppen: -Si(R₁)₂(R₂), -Si(R₁) (R₂)₂ und -Si(R₂)₃, worin R₁ eine C₁ bis C₄ -Alkyl-Gruppe, eine CyclohexylGruppe oder eine Phenyl-Gruppe und R₂ eine C₁ bis C₁₈-Alkoxy-Gruppe oder eine C₅ bis C₈ - Cycloalkoxy-Gruppe, Alk ein divalenter Kohlenwasserstoff, der 1 bis 18 Kohlenstoffatome enthält, und n eine Zahl von 2 bis 8 sind.

39. Verfahren nach Anspruch 18 oder 19, bei welchem der Kondensationskatalysator ausgewählt wird aus
- Metallcarboxylaten,
- Arylsulfonsäuren oder Derivaten davon,
- Amine und Alkanolamine,
- starke anorganische Säuren oder Basen,
- organische Säuren,
- geblockten Säuren,
- Zeoliten, die durch eine Reaktion mit wenigstens einer Carbonund/oder Sulfonsäure modifiziert sind.

40. Verfahren nach Anspruch 25 oder 26, bei welchem das Einfangmittel ausgewählt wird aus Magnesiumoxyd, tertiären Aminen wie Triethylamin oder N, N'-Diisopropylethylamin.

41. Reifen für ein Fahrzeugrad, welche die folgenden Bauteile aufweist:
- einen Karkassenaufbau, der wenigstens eine gummierte Karkassenlage hat, die im Wesentlichen Toroidform hat und die mit ihren gegenüberliegenden Umfangsrändern mit einem Paar von nicht dehnbaren ringförmigen Aufbauten in Eingriff steht,
- einen Gurtaufbau mit wenigstens einem Gurtstreifen, der in einer am Umfang äußeren Position bezogen auf den Karkassenaufbau aufgebracht ist,
- ein Laufflächenband, das am Umfang auf den Gurtaufbau aufgebracht ist,
- ein Paar von Seitenwänden, die seitlich an gegenüberliegenden Seiten bezogen auf den Karkassenaufbau aufgebracht sind und
- eine Überzugsschicht aus vernetztem elastomeren Material, die in einer radial inneren Position bezogen auf die gummierte Karkassenlage angeordnet ist,
**dadurch gekennzeichnet,**
- **dass** die Überzugsschicht durch Vernetzen wenigstens eines Elastomers erhalten wird, das hydrolysierbare Silangruppen enthält.

42. Reifen nach Anspruch 41, bei welchem das Vernetzen der Überzugsschicht bei Vorhandensein eines Vernetzungsmittels erhalten wird, das aus Schwefel oder Derivaten davon basiert.

43. Reifen nach Anspruch 41 oder 42, bei welchem die Überzugsschicht in einem der Ansprüche 8 bis 39 definiert ist.

44. Reifen nach einem der Ansprüche 41 bis 43, bei welchem die Überzugsschicht eine Schicht ist, die für ein Fluid zum Aufpumpen des Reifens undurchlässig ist, wenn dieser Reifen auf einer Radfelge installiert ist.

## Revendications

1. Procédé de fabrication, de moulage et de vulcanisation de pneus pour roues de véhicules, qui comprend les étapes suivantes :
- on forme au moins une couche de revêtement en matière élastomère réticulable sur la surface externe d'un support toroïdal dont la forme correspond pratiquement à celle de la surface interne du pneu,
- on fabrique un pneu vert comprenant au moins un élément comprenant une matière élastomère réticulable, sur ledit support toroïdal portant ladite couche de revêtement,
- on enferme le pneu vert dans une cavité de moulage formée à l'intérieur d'un moule de vulcanisation, ladite cavité de moulage ayant des parois dont la forme correspond à celle de la surface externe du pneu une fois que la vulcanisation est complète,
- on introduit dans l'espace défini par la surface interne du pneu un fluide sous pression pour presser la surface externe du pneu vert contre les parois de la cavité de moulage,
- on applique de la chaleur au pneu pour provoquer la vulcanisation de la matière élastomère réticulable,
procédé **caractérisé en ce que** ladite couche de revêtement comprend au moins un élastomère contenant des groupes silane hydrolysables.

2. Procédé selon la revendication 1, dans lequel ladite couche de revêtement comprend un agent de réticulation à base de soufre ou de dérivés du soufre.

3. Procédé selon la revendication 1 ou 2, dans lequel la couche de revêtement atteint un degré de réticulation suffisant pour empêcher la diffusion et la pénétration du fluide sous pression dans le pneu vert, en un laps de temps qui ne dépasse pas dix minutes, la température de travail ne dépassant pas 210°C.

4. Procédé selon la revendication 3, dans lequel ladite couche de revêtement atteint un degré de réticulation suffisant pour empêcher la diffusion et la pénétration du fluide sous pression dans le pneu vert, en un laps de temps de une à cinq minutes.

5. Procédé selon la revendication 3 ou 4, dans lequel la couche de revêtement atteint un degré de réticulation suffisant pour empêcher la diffusion et la pénétration du fluide sous pression dans le pneu vert, la température de travail étant comprise entre 100°C et 140°C.

6. Procédé selon l'une quelconque des revendications précédentes, dans lequel le fluide sous pression est choisi parmi la vapeur d'eau, l'air, l'azote et les mélanges de ces fluides.

7. Procédé selon la revendication 6, dans lequel le fluide sous pression est la vapeur d'eau.

8. Procédé selon l'une quelconque des revendications précédentes, dans lequel la couche de revêtement comprend 20 parties pour cent (en abrégé ppc) à 100 ppc d'au moins un élastomère contenant des groupes silane hydrolysables.

9. Procédé selon la revendication 8, dans lequel la couche de revêtement comprend 50 ppc à 90 ppc d'au moins un élastomère contenant des groupes silane hydrolysables.

10. Procédé selon l'une quelconque des revendications précédentes, dans lequel l'élastomère contenant des groupes silane hydrolysables renferme 0,1 % à 5 % en poids de groupes silane hydrolysables.

11. Procédé selon la revendication 10, dans lequel l'elastomère contenant des groupes silane hydrolysables renferme 0,5 % à 3 % en poids de groupes silane hydrolysables.

12. Procédé selon l'une quelconque des revendications précédentes, dans lequel la couche de revêtement comprend 0 ppc à 30 ppc d'au moins un butylcaoutchouc.

13. Procédé selon la revendication 12, dans lequel la couche de revêtement comprend 5 ppc à 15 ppc d'au moins un butylcaoutchouc.

14. Procédé selon l'une quelconque des revendications précédentes, dans lequel la couche de revêtement comprend 0 ppc à 80 ppc d'au moins un élastomère de diène autre qu'un butylcaoutchouc.

15. Procédé selon la revendication 14, dans lequel la couche de revêtement comprend 10 ppc à 50 ppc d'au moins un élastomère de diène autre qu'un butylcaoutchouc.

16. Procédé selon l'une quelconque des revendications précédentes, dans lequel la couche de revêtement comprend 0 ppc à 3 ppc d'un agent de couplage.

17. Procédé selon la revendication 16, dans lequel la couche de revêtement comprend 0,5 ppc à 1,5 ppc d'un agent de couplage.

18. Procédé selon l'une quelconque des revendications précédentes, dans lequel la couche de revêtement comprend 0 ppc à 0,5 ppc d'un catalyseur de condensation.

19. Procédé selon la revendication 18, dans lequel la couche de revêtement comprend 0,05 ppc à 0,15 ppc d'un catalyseur de condensation.

20. Procédé selon l'une quelconque des revendications précédentes, dans lequel la couche de revêtement comprend 0 ppc à 5 ppc d'un silane de formule générale (I) : 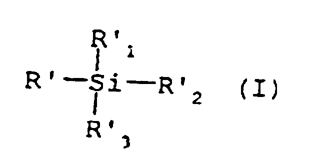 dans laquelle :
- R' représente un groupe alkyle en C₁-C₁₈, un groupe aryle en C₆-C₂₀.
un groupe alkylaryle ou aralkyle en C₇-C₃₀, ou un groupe cycloalkyle en C₃-C₃₀, ce dernier étant éventuellement substitué par des groupes alkyles en C₁-C₁₈,
- R'₁, R'₂, et R'₃, qui peuvent être identiques ou différents, représentent chacun un atome d'hydrogène, un groupe alcoxy en C,-C_{8,} un groupe alkyle en C₁-C_{18,} un groupe aryle en C₆-C₂₀, un groupe alkylaryle ou aralkyle en C₇-C₃₀, étant entendu qu'au moins un des groupes R'₁, R'₂, et R'₃ représente un groupe alcoxy.

21. Procédé selon la revendication 20, dans lequel la couche de revêtement comprend 0,5 ppc à 3 ppc d'un silane de formule générale (I).

22. Procédé selon l'une quelconque des revendications précédentes, dans lequel l'elastomère contenant des groupes silane hydrolysables est un produit obtenu par réaction d'un élastomère contenant au moins un groupe fonctionnel, avec un silane contenant au moins un groupe hydrolysable et au moins un groupe réactif, apte à réagir avec ledit groupe fonctionnel de l'élastomère.

23. Procédé selon la revendication 22, dans lequel l'elastomère contenant au moins un groupe fonctionnel est un élastomère contenant comme groupe fonctionnel au moins un atome d'halogène choisi parmi le chlore et le brome.

24. Procédé selon la revendication 22, dans lequel l'élastomère contenant au moins un groupe fonctionnel est un élastomère contenant au moins un groupe fonctionnel choisi parmi :
- les groupes anhydride -(RCO)₂O où R représente un groupe alkylène,
- le groupe carboxyle -COOH,
- les groupes ester -COOR où R représente un groupe alkyle ou aryle,
- le groupe amide -CONH₂.

25. Procédé selon la revendication 23, dans lequel la couche de revêtement comprend 0,1 ppc à 4 ppc d'un agent de capture.

26. Procédé selon la revendication 25, dans lequel la couche de revêtement comprend 1 ppc à 3 ppc d'un agent de capture.

27. Procédé selon l'une quelconque des revendications 22 à 26, dans lequel le groupe réactif du silane est un groupe amino ou un groupe époxyde.

28. Procédé selon l'une quelconque des revendications 22 à 27, dans lequel le silane est utilisé en une quantité de 0,1 ppc à 5 ppc.

29. Procédé selon la revendication 28, dans lequel le silane est utilisé en une quantité de 0,5 ppc à 3 ppc.

30. Procédé selon la revendication 23, dans lequel l'élastomère contenant un atome d'halogène comme groupe fonctionnel est choisi parmi les halogénobutylcaoutchoucs, les caoutchoucs d'épihalogénohydrine et les copolymères de p-alkylstyrène et d'isobutylène halogéné.

31. Procédé selon l'une quelconque des revendications 22 à 30, dans lequel le silane contenant au moins un groupe hydrolysable et au moins un groupe réactif, apte à réagir avec les groupes fonctionnels mentionnés précédemment, est un aminosilane de formule générale (II) : 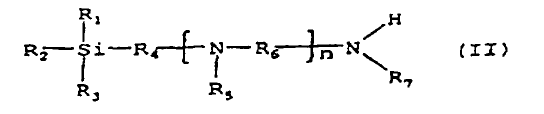 dans laquelle :
- R_{1,} R₂ et R₃, qui peuvent être identiques ou différents, représentent chacun un atome d'hydrogène, un groupe alcoxy en C₁-C_{8,} un groupe alkyle en C₁-C_{18,} un groupe aryle en C₆-C_{20,} ou un groupe alkylaryle ou arylalkyle en C₇-C₃₀, étant entendu qu'au moins l'un des groupes R₁, R₂ et R₃ représente un groupe alcoxy,
- R₄ représente un groupe alkylène en C₁-C₁₈ ou un groupe arylène en C₆-C₂₀, éventuellement substitué par des groupes alkyle en C₁-C₈.
- R₅ et R_{7,} qui peuvent être identiques ou différents, représentent chacun un atome d'hydrogène ou un groupe alkyle en C,-C₁₈, ou bien, lorsque R₅ et R₇ ne sont pas des atomes d'hydrogène, ils peuvent former avec les atomes d'azote auxquels ils sont liés, un noyau hétérocyclique à 5 ou 6 chaînons,
- R₆ représente un groupe alkylène en C₁-C_{18,} un groupe arylène en C₆-C_{14,} éventuellement substitué par des groupes alkyle en C₁-C_{18,} un groupe alkylènearylène ou arylènealkylène en C₇-C₃₀ ou un groupe cycloalkylène en C₃-C₃₀, éventuellement substitué par des groupes alkyle en C₁-C₁₈, et
- n désigne un nombre entier de 0 à 5.

32. Procédé selon la revendication 31, dans lequel R_{1,} R₂ et R₃ représentent des groupes alcoxy en C₁-C_{3,} R₄ représente un groupe alkylène en C₁-C_{3,} R₇ représente un atome d'hydrogène et n est égal à 0.

33. Procédé selon l'une quelconque des revendications 22 à 30, dans lequel le silane contenant au moins un groupe réactif, apte à réagir avec les groupes fonctionnels mentionnés précédemment, est un époxysilane.

34. Procédé selon la revendication 33, dans lequel l'époxysilane est le 3-glycidyloxypropyltriméthoxysilane, le 3-glycidyloxypropylméthyldiméthoxysilane ou le 2-(3,4-époxycyclohexyl)éthyltriméthoxysilane.

35. Procédé selon la revendication 12 ou 13, dans lequel le butylcaoutchouc est un caoutchouc choisi parmi les copolymères contenant d'environ 95,5 % à environ 99,5 % d'isobutylène et d'environ 0,5 % à environ 4,5 % d'isoprène.

36. Procédé selon la revendication 14 ou 15, dans lequel l'élastomère de diène est un produit choisi parmi les caoutchoucs synthétiques ou naturels, éventuellement dilués avec de l'huile, tels que le caoutchouc naturel, le polybutadiène, le polyisoprène, les copolymères de styrène et de butadiène, les copolymères de butadiène et d'isoprène, les copolymères de styrène et d'isoprène, les caoutchoucs nitriles, les terpolymères d'éthylène, de propylène et de diènes non conjugués tels que le 5-éthylidene-2-norbornène, le 1,4-hexadiène, le cyclooctadiène et le dicyclopentadiène, et leurs mélanges.

37. Procédé selon la revendication16 ou 17, dans lequel l'agent de couplage est un agent contenant au moins un groupe silane hydrolysable et au moins un atome de soufre.

38. Procédé selon la revendication 37, dans lequel l'agent de couplage est un composé de formule (III) :
Z-Alk-Sₙ-Alk-Z (III)
dans laquelle Z représente un groupe -Si(R₁)₂(R₂), -Si(R₁)(R₂)₂ ou -Si(R₂)₃, où R₁ représente un groupe alkyle en C₁-C₄, un groupe cyclohexyle ou un groupe phényle et R₂ représente un groupe alcoxy en C₁-C₁₈ ou un groupe cycloalcoxy en C₅-C_{8,} Alk représente un groupe hydrocarboné divalent ayant 1 à 18 atomes de carbone et n désigne un nombre de 2 à 8.

39. Procédé selon la revendication 18 ou 19, dans lequel le catalyseur de condensation est un catalyseur choisi parmi :
- les carboxylates métalliques,
- les acides arylsulfoniques et leurs dérivés,
- les amines et alcanolamines,
- les acides minéraux forts et les bases minérales fortes,
- les acides organiques,
- les acides bloqués,
- et les zéolites modifiées par réaction avec au moins un acide carboxylique et/ou un acide sulfonique.

40. Procédé selon la revendication 25 ou 26, dans lequel l'agent de capture est un produit choisi parmi l'oxyde de magnésium et les amines tertiaires comme la triéthylamine et la N,N'-diisopropyléthylamine.

41. Pneu pour roue de véhicule, comprenant les éléments suivants :
- une structure formant une carcasse, ayant au moins un pli de carcasse caoutchouté, de configuration pratiquemment toroïdale et fixé par ses bords circonférentiels opposés à une paire de structures annulaires inextensibles,
- une courroie comprenant au moins une bande de courroie, appliquée sur la circonférence de ladite carcasse, en une position externe par rapport à ladite carcasse,
- une bande de roulement superposée à ladite courroie, suivant la circonférence,
- une paire de flancs appliqués latéralement sur les côtés opposés de ladite carcasse, et
- une couche de revêtement en matière élastomère réticulée, placée en une position radialement interne par rapport audit pli de carcasse caoutchouté,
pneu **caractérisé en ce que** ladite couche de revêtement est obtenue par réticulation d'au moins un élastomère contenant des groupes silane hydrolysables.

42. Pneu selon la revendication 41, pour lequel la réticulation de ladite couche de revêtement est obtenue en présence d'un agent de réticulation à base de soufre ou de dérivés du soufre.

43. Pneu selon la revendication 41 ou 12, pour lequel la couche de revêtement est une couche de revêtement telle que définie dans l'une quelconque des revendications 8 à 39.

44. Pneu selon l'une quelconque des revendications 41 à 43, pour lequel la couche de revêtement est une couche qui est imperméable au fluide utilisé pour le gonflement du pneu lorsque le pneu est placé sur une jante de roue.
